Europäisches Patentamt

European Patent Office

Office européen des brevets

(11) Publication number: **0 143 457**
**B1**

# (12) EUROPEAN PATENT SPECIFICATION

(45) Date of publication of patent specification: **24.10.90**

(51) Int. Cl.⁵: **B 29 C 61/10** // B29K23:00

(21) Application number: **84114336.5**

(22) Date of filing: **28.11.84**

(54) Method for covering continuous articles.

(30) Priority: **29.11.83 JP 225096/83**

(43) Date of publication of application:
**05.06.85 Bulletin 85/23**

(45) Publication of the grant of the patent:
**24.10.90 Bulletin 90/43**

(84) Designated Contracting States:
**DE**

(56) References cited:
**EP-A-0 020 007**
**EP-A-0 023 788**
**EP-A-0 048 147**
**EP-A-0 049 609**
**EP-A-0 078 695**
**FR-A-2 104 067**
**US-A-3 959 052**
**US-A-4 190 485**
**US-A-4 200 676**
**US-A-4 359 502**
**US-A-4 378 393**

(73) Proprietor: **UBE INDUSTRIES, LTD,**
**12-32, Nishihonmachi 1-chome**
**Ube-shi, Yamaguchi-ken 755 (JP)**

(72) Inventor: **Sawanishi, Kaoru**
**5571-3, Takayanagi**
**Kisarazu-shi Chiba-ken (JP)**

(74) Representative: **Brandes, Jürgen, Dr.Rer.Nat.**
**et al**
**Wuesthoff & Wuesthoff Patent- und**
**Rechtsanwälte Schweigerstrasse 2**
**D-8000 München 90 (DE)**

Courier Press, Leamington Spa, England.

# EP 0 143 457 B1

**Description**

Background of the invention

(1) Field of the invention

The present invention relates to a method for covering the periphery of a continuous article such as a steel pipe or a cable with a heat-shrinkable covering sheet comprising a plastic layer having a heat shrinkability and a heat-bonding adhesive layer and, further, with a heat-sealing tape for attaining a protecting or anti-corrosive effect.

(2) Description of the related art

When a connecting part of a continuous article such as a resin-covered steel pipe or a power transmission or communication cable is covered with a heat-shrinkable covering sheet mainly for the protection or prevention of corrosion, there is ordinarily adopted a method in which the heat-shrinkable covering sheet is wound around the periphery of the continuous article to be covered, both the ends in the heat-shrinking direction of the covering sheet are lapped together, a heat-sealing tape is further lapped on the lapping portion of the covering sheet, and heating is then effected to bond the heat-sealing tape to the covering sheet and thus form a tubular member of the heat-shrinkable covering sheet. The tubular member is then heated to heat-shrink the tubular member toward the peripheral face of the continuous article to effect adhesion and bonding, whereby the continuous article is covered. A method of this type is known for example from FR—A—2 104 067.

Since the heat-shrinkable covering sheet used for the above purpose is considerably thick, i.e., has a thickness of about 0.5 to about 5 mm, when the connecting part of the continuous article is covered with this heat-shrinkable covering sheet, there is formed a difference in level between the surface of the continuous article and the lapped end portion of the heat-shrinkable covering sheet wound around the periphery of the connecting part of the continuous article. Accordingly, care should be taken to prevent the formation of a void due to the level difference, to fill a void formed by the level difference, or to prevent the expansion of such a void.

A plastic tape having an adhesive layer alone or a heat-sealing tape comprising a reinforcing layer, a plastic layer and an adhesive layer has heretofore been used as the heat-sealiing tape. In this conventional heat-sealing tape, the plastic layer of the heat-sealing tape bonded to the lapping portion of the heat-shrinkable covering sheet shaped in a tubular form, as described above, is thermally elongated by the shrinking stress caused during the heat-shrinking of the tubular member of the heat-shrinkable covering sheet causing the lapping portion to slip, with the result that a new void is formed by the above-mentioned level difference or the existing void is expanded and the so formed void acts as a path allowing the permeation and intrusion of a liquid such as water (so-called waterway). Accordingly, there arises a serious problem of a reduction in the anti-corrosive covering effect.

Furthermore, because of elongation of the heat-sealing tape and slip of the lapped portion both occurring during the heat-shrinking of the covering sheet, the clamping pressure of the covering sheet to the periphery of the connecting part of the continuous article, produced by the thermal shrinking of the tubular member of the covering sheet, is very weak. Accordingly, when the covering sheet is cooled to normal temperature after the heat-shrinking operation, the residual stress on the adhesive layer between the periphery of the continuous article and the tubular covering layer formed by the thermal shrinkage of the tubular member of the covering sheet is reduced, with the result that the anti-corrosive capacity is reduced.

Summary of the invention

It is the primary object of the present invention to overcome the defects of the known method for covering a connecting part of a continuous article such as a steel pipe or a cable by using the above-mentioned heat-shrinkable covering sheet and heat-sealing tape to prevent slipping of the lapping portion of the heat-shrinkable covering sheet.

In accordance with the present invention, there is provided a method for covering the periphery of a continuous article with a heat-shrinkable covering sheet comprising a plastic layer having a heat shrinkability and a heat-bonding adhesive layer wherein the heat-shrinkable covering sheet is wound around the periphery of the continuous article, both ends of the covering sheet are lapped together, a heat-sealing tape having a heat-bonding adhesive layer formed on one surface is further lapped on the lapping portion of the covering sheet to form a tubular member of the covering sheet, and then the tubular member is heated to thereby shrink toward the periphery of the continuous article.

This method is characterized in that a heat-sealing tape comprising a plastic layer exhibiting a thermal shrinkage factor of 5 to 25% in the width direction of the tape and a heat-bonding adhesive layer is lapped on the covering sheet the heat-bonding adhesive layer of which covering sheet is formed on a single entire surface of the plastic layer so that the heat-shrinking direction of the heat-sealing tape is the same as the heat-shrinking direction of the heat-shrinkable covering sheet and the adhesive layer of the heat-sealing tape is brought in close contact with the surface of said lapping portion of the heat-shrinkable covering sheet, said adhesive layer of the heat-sealing tape being comprised of a heat-bonding crosslinked polymer exhibiting a shear strength of 0.1 to 5 $kg/cm^2$ as determined at 100°C and 0.01 to 0.8 $kg/cm^2$ as determined

2

at 150°C, to the surfaces of both ends of the heat-shrinkable covering sheet; heating is then effected under conditions such that at least ubout 1/2 of the heat-shrinkability of the heat-sealing tape remains.

## Brief description of the drawings

Figure 1 is a perspective view illustrating an embodiment of the method for covering a continuous article according to the present invention, in which a heat-shrinkable covering sheet is wound around the periphery of the continuous article, both the ends of the covering sheet are lapped together, and a heat-sealing tape is lapped on the lapping portion to form a tubular member of the covering sheet;

Figure 2 is an enlarged sectional view illustrating the lapping portion of the tubular member shown in Figure 1;

Figure 3 is an enlarged sectional view illustrating a part of a continuous article covered according to the covering method of the present invention; and

Figure 4 is an enlarged sectional view illustrating a part of a continuous article covered according to a known covering method similar to the covering method of the present invention.

## Description of the preferred embodiments

According to the method of the present invention, since the heat-sealing tape is thermally shrunk at the heating step, the lapping portion of the heat-shrinkable covering sheet wound around the periphery of the continuous article is neither slipped nor shortened when the tubular member of the heat-shrinkable covering sheet is heated and shrunk. Even if slipping is caused, it can be controlled to a minimum extent. Therefore, formation of a void due to the level difference of the lapping portion can be prevented or minimized and an anti-corrosive effect can be attained. Thus, an excellent anti-corrosive covering layer can be formed on the periphery of the connecting part of a continuous article such as a steel pipe or a cable.

The method for covering a continuous article according to the present invention will now be described in detail with reference to the accompanying drawings.

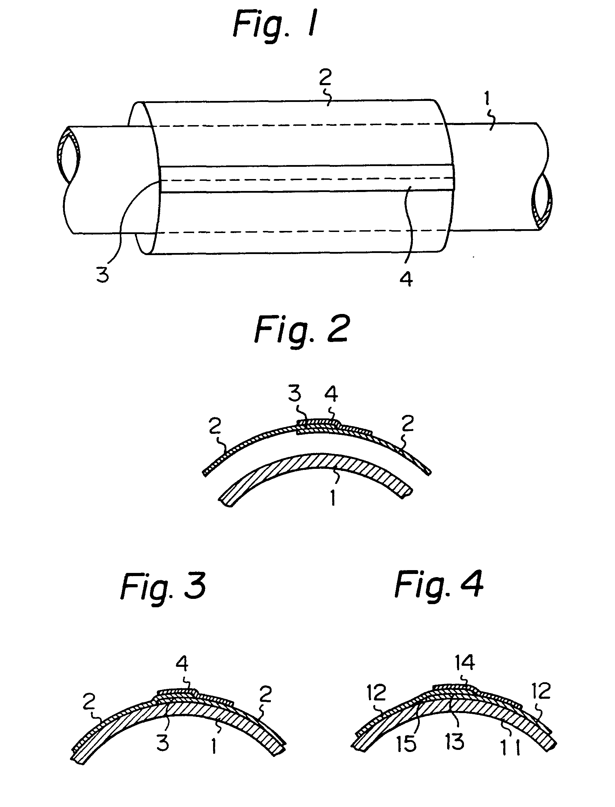

According to the covering method of the present invention, as shown in Figure 1, a heat-shrinkable covering sheet 2 is wound on the periphery of a continuous article (such as a steel pipe) 1, both ends in the heat-shrinking direction (i.e., the peripheral direction of the steel pipe) of the covering sheet are lapped together, and a heat-sealing tape 4 having a heat shrinkability in the width direction is further lapped onto a lapping portion 3. The region including the lapping portion 3 is then heated to fusion-bond the heat-sealing tape 4 integrally to the lapping portion 3, whereby a tubular member of the heat-shrinkable covering sheet 2 is formed.

As shown in Figures 1 and 2, when the tubular member of the heat-shrinkable covering sheet 2 is formed, the heat-sealing tape 4 is lapped on the lapping portion 3 of both ends of the heat-shrinkable covering sheet 2 in such a manner that the heat-shrinking direction of the heat-sealing tape 4 is the same as the heat-shrinking direction of the heat-shrinkable covering sheet 2, and the adhesive layer of the heat-sealing tape 4 is brought into close contact with the surface of the lapping portion 3 of the heat-shrinkable covering sheet 2.

At the step of forming the tubular member of the heat-shrinkable covering sheet, as shown in Figure 2, heating for heat-bonding the heat-sealing tape 4 to the lapping portion 3 of the heat-shrinkable covering sheet 2 is carried out under conditions such that the heat shrinkability of the heat-sealing tape 4 is not completely lost, more specifically, conditions such that at least about 1/2 of the heat shrinkability of the tape 4 remains. For example, in the case of a heat-sealing tape having a heat shrinkage factor of about 10%, the tape show a heat shrinkage factor of about 5% or more at the subsequent step of heat-shrinking the tubular member.

The heat-sealing tape used for formation of the tubular member of the heat-shrinkable covering sheet comprises a heat-bonding adhesive layer formed on one surface of a plastic layer capable of being shrunk in the width direction of the tape, i.e., the direction perpendicular to the longitudinal direction.

The plastic layer of the heat-sealing tape has a thermal shrinkage factor of 5 to 25%, more preferably, 8 to 22%. Such a heat-shrinkable plastic layer is prepared by shaping a polyolefin resin composition into a film or sheet form having a thickness of about 50 to about 2000 μm, more preferably, 100°C to 1500 μm, by extrusion or another shaping procedure, and then drawing the polyolefin film or sheet at a temperature of about 80°C to about 200°C, more preferably, about 90°C to about 180°C. The polyolefin resin composition comprises as the main component an olefin polymer such as polyethylene, polypropylene, an ethylene-propylene copolymer or an ethylene-vinyl acetate copolymer, and auxiliary materials such as other polymers, a plasticizer, an antioxidant, a flame retardant, and a filler (e.g., calcium carbonate, silica, alumina, mica or carbon black). This plastic layer is crosslinked by electron beams, X-rays, α-rays, β-rays or γ-rays. It is preferable that the crosslinking degree be such that the gel fraction described below is about 20 to about 90%, more preferably, about 30 to about 80%.

The method of the present invention is prominently characterized in that the heat-sealing tape used for formation of the tubular member of the heat-shrinkable covering sheet can be thermally shrunk in the width direction thereof. If the thermal shrinkage factor is smaller than about 5%, the heat shrinkability of the tape is substantially lost at the step of forming the tubular member of the heat-shrinkable covering sheet, and the effect of preventing slipping of the lapping portion of the tubular member of the heat-shrinkable covering sheet at the subsequent step of heat-shrinking the tubular member cannot be attained.

If the thermal shrinkage factor of the tape is larger than about 25%, wrinkling or waving is caused on the heat-sealing tape at the bonding step of forming the tubular member of the heat-shrinkable covering sheet, or the lapping portion of the tubular member is deformed at the step of heat-shrinking the tubular member.

The adhesive used for the formation of the adhesive layer in the heat-sealing tape is an adhesive composition comprising a polyolefin (preferably, in an amount of about 50 to about 95% by weight, more preferably, 60 to 90% by weight, based on the total adhesive composition) and a tackifier (preferably, in an amount of about 5 to about 50% by weight, more preferably, 10 to 40% by weight, based on the total adhesive composition) as the main components, and the polymer component of this adhesive composition is appropriately crosslinked by irradiation with high-energy radiations such as electron beams, X-rays, α-rays, β-rays, and γ-rays or by chemical reaction using a crosslinking agent such as a peroxide. It is preferred that the crosslinking degree be such that the gel fraction described below is about 5 to about 50%, more preferably, 10 to about 40%. A preferable heat-bonding crosslinked polymer adhesive layer has a shear strength to the surfaces of both ends of the heat-shrinkable covering sheet to be heat-bonded at a sufficiently highly elevated temperature, of 0.5 to 5 kg/cm$^2$, as determined at 100°C and 0.05 to 0.8 kg/cm$^2$, as determined at 150°C.

The gel fraction described above is the value obtained by dipping a sample in xylene and refluxing xylene at about 130°C for about 10 hours, to partially dissolve the xylene. The weight (A, g) of the portion of the sample not dissolved in xylene is divided by the total weight (B, g) of the sample subjected to the test, and the obtained value is multiplied by 100; that is, the value is represented by the following formula:

$$Gel\ fraction\ (\%) = (A/B) \times 100$$

The polyolefin used includes, for example, polyethylene, polypropylene, polyvinyl chloride, an ethylenevinyl acetate copolymer, an ethylene-propylene copolymer, ethylene-(meth)acrylate copolymers such as an ethylene-ethyl acrylate copolymer, an ethylene-methyl acrylate copolymer and an ethylene-ethyl methacrylate copolymer, ethylene-(meth)acrylic acid copolymers such as an ethylene-acrylic acid copolymer and an ethylene-methacrylic acid copolymer, and modification products of these polymers (e.g., maleic acid-modified polyethylene and maleic acid-modified polypropylene). These polymers may be used alone or in the form of a mixture of two or more.

Ordinary tackifiers customarily used for known hot-melt adhesives may optionally be chosen and used as the tackifier in the present invention. For example, there can be mentioned a rosin, a rosin derivative, a pinen resin, a cumarone resin, a cumarone-indene resin, an aliphatic or alicyclic hydrocarbon resin, and an aromatic hydrocarbon resin.

The adhesive layer of the heat-sealing tape may comprise an inorganic filler such as talc, calcium carbonate, silica, alumina, mica or carbon black, an antioxidant, a colorant, a softener, and other additive in addition to the above-mentioned components.

The heat-sealing tape may be prepared as follows. A wide plastic film e.g., a wide polyolefin film or sheet from the above-mentioned polyolefin resin composition is formed by extrusion or another shaping procedure and, then, the film or sheet is drawn at the above-mentioned drawing temperature (i.e., about 80°C to about 200°C) at an appropriate draw ratio to impart an appropriate heat shrinkability (i.e., about 5 to 25%) to the film or sheet. An adhesive film or sheet is formed from the above-mentioned adhesive composition by extrusion or another shaping procedure. The polyolefin film or sheet and the adhesive film or sheet are laminated together. Instead of laminating the polyolefin film or sheet with the adhesive film or sheet, the laminate may be prepared by forming an adhesive layer on the polyolefin film or sheet by extrusion lamination. Therefore, crosslinking is effected by applying electron beams or the like to the adhesive layer side of the resulting laminate or the polyolefin layer side thereof to form a continuous wide web comprising the partially crosslinked adhesive layer and the heat-shrinkable crosslinked polyolefin layer. Then the wide web is cut in the direction rectangular to the longitudinal direction (i.e., in the heat-shrinking direction) at appropriate intervals (corresponding to the width of the heat-sealing tape).

The irradiation with electron beams or the like to effect crosslinking may be made on the laminate comprising a plastic layer and an adhesive layer, as mentioned above. Alternatively, the irradiation with electron beams or the like may be made on a plastic film or sheet before it is laminated with an adhesive layer, and again made on the laminate comprising the crosslinked plastic layer and the adhesive layer. The irradiation on a plastic film or sheet may be made either before or after the plastic film or sheet is drawn.

In the present invention, the thicknesses of the adhesive layer and crosslinked polyolefin layer of the heat-sealing tape are not particularly critical. However, it is preferable that the thickness of the adhesive layer be about 0.1 to about 3.0 mm, more preferably, about 0.1 to about 2.5 mm, the thickness of the plastic layer be about 0.05 to about 2.5 mm, especially about 0.1 to about 2.0 mm, the ratio in thickness of the adhesive layer to the plastic layer be in the range of from about 1/10 to about 3/1, and the entire thickness of the heat-sealing tape be about 0.2 to about 4 mm, more preferably, about 0.3 to about 3 mm. The heat-sealing tape satisfying these thickness conditions exhibits a softness suitable for handling and a sufficient mechanical strength after connection. It is also preferred that the width of the heat-sealing tape (i.e., the length of the tape in the direction rectangular to the longitudinal direction) be about 5 to about 50 cm, more preferably, about 10 to about 50 cm.

The heat-shrinkable covering sheet used in the covering method of the present invention is not particularly critical, provided that a heat-bondable adhesive layer is formed entirely on one surface of a crosslinked plastic layer having a heat shrinkability. However, a heat-shrinkable covering sheet described below is preferably used.

Namely, in the preferred heat-shrinkable covering sheet, the crosslinked plastic layer is composed of a known heat-shrinkable crosslinked plastic film or sheet or a laminate sheet thereof, and has a heat-shrinking temperature of about 80°C to about 200°C, more preferably, about 90°C to about 180°C, and a thermal shrinkage factor of about 15 to about 80%, more preferably, about 20 to about 75%. It also is preferable that the crosslinking degree (expressed in gel fraction) of the polymer in the plastic layer be about 20 to about 90%, more preferably, about 25 to about 80%.

It is preferable that the adhesive layer of the heat-shrinkable covering sheet be composed of an adhesive having a peeling strength of 1 to 25 kg/cm, more preferably, 4 to 25 kg/cm, as measured at normal temperature (about 20°C).

The adhesive may be an adhesive composition comprising a thermoplastic resin, for example, a polyolefin (such as polyethylene, polypropylene, an ethylene-vinyl acetate copolymer, an ethylene-propylene copolymer or a maleic acid modification product thereof), other modifying polymer, a rubber component, a tackifier, an anti-corrosive agent and an inorganic filler.

In the covering method of the present invention, as pointed out hereinbefore, after the tubular member of the heat-shrinkable covering sheet 2 has been formed as shown in Figure 1, the entire tubular member is sufficiently heated at the heat-shrinking temperature thereof to be thereby thermally shrunk toward the periphery of the continuous article 1, whereby the tubular member of the heat-shrinkable covering sheet 2 is closely bonded to the periphery of the continuous article 1 to cover the periphery of the continuous article 1, as shown in Figure 3.

At the step of heat-shrinking the tubular member of the heat-shrinkable covering sheet, both ends lapped in the lapping portion 3 of the tubular member are pulled in opposite directions by the heat shrinkage force of the covering sheet 2 and a slipping action is imposed on the lapping portion 3.

If a known heat-sealing tape 14 is used, as shown in Figure 4, a lapping portion 13 of a heat-shrinkable covering sheet 12 is subject to a large degree of slip at the above-mentioned heat-shrinking step and a void 15 is formed between the peripheral face of a continuous article 11 and the heat-shrinkable covering sheet 12 by the movement of the covering sheet in the lapping portion 13 thereof. This void 15 acts as a waterway allowing permeation and the intrusion of a liquid such as water, and thus the anti-corrosive effect to the steel pipe is degraded.

In contrast, according to the covering method of the present invention, since the heat-sealing tape is composed of a material having a heat shrinkability, at the step of heat-shrinking the tubular member of the heat-shrinkable covering sheet, slipping of the lapping portion of the tubular member caused by the heat shrinkage of the tubular member is substantially prevented by the heat shrinkage force of the heat-sealing tape. Accordingly, the formation of a void caused by the movement of the covering sheet in the lapping portion does not occur and a covering having a suitable anti-corrosive action can be formed as shown in Figure 3.

In order to attain the above-mentioned effect, it is indispensable that the adhesive layer of the heat-sealing tape should exert a considerably strong shear strength at the step of heat-shrinking the tubular member. From this viewpoint, it is preferable that the adhesive layer be composed of a heat-bonding crosslinked polymer adhesive formed by partially crosslinking an adhesive composition comprising as the main components a polyolefin and a tackifier, as described hereinbefore.

As is apparent from the foregoing description, according to the covering method of the present invention, a heat-shrinkable material is used for the heat-sealing tape, and this heat-sealing tape is lapped on the lapping portion of a heat-shrinkable covering sheet wound around the periphery of a continuous article, so that the heat-shrinking direction of the heat-sealing tape is the same as the heat-shrinking direction of the heat-shrinkable covering sheet, whereby the heat-sealing tape is bonded integrally to the heat-shrinkable covering sheet. According to the covering method of the present invention, since heat shrinkage of this tubular member is effected, formation of a void causing a problem of reduction of the anti-corrosive effect on the lapping portion is prevented by the heat shrinkage of the heat-sealing tape and, consequently, the periphery of the continuous article can be effectively covered. Therefore, the method for covering a continuous article according to the present invention is move commercially valuable, and has far better effects, than the conventional method, especially as a means for forming an anti-corrosive covering on a steel pipe.

The present invention will now be described in detail with reference to the following examples and comparative examples.

Example 1

A heat-bonding adhesive having a composition described below was kneaded at 150°C for 5 minutes by using a kneader and was then formed into an adhesive sheet having a thickness of 1.5 mm by using rollers.

| | |
|---|---|
| Ethylene-vinyl acetate copolymer | 20% by weight |
| Ethylene-propylene copolymer | 10% by weight |

| Styrene-butadiene-styrene block | |
|---|---|
| copolymer rubber | 15% by weight |
| Polybutene | 15% by weight |
| Cumarone-indene resin | 30% by weight |
| Talc | 10% by weight |

This adhesive sheet was bonded entirely on one surface of a crosslinked heat-shrinkable plastic sheet (composed of polyethylene; thickness=1.0 mm, gel fraction=60%, thermal shrinkage factor=30% in length direction, heat-shrinking temperature=105°C) to form a rectangular heat-shrinkable covering sheet having a thickness of 2.5 mm, a width of 450 mm, and a length of 1465 mm).

Separately, an adhesive composition comprising 80% by weight of an ethylene-ethyl acrylate copolymer and 20% by weight of a cumarone-indene resin was extruded into a sheet having a thickness of 1.0 mm, and the thus-obtained adhesive sheet was laminated on one surface of a continuous wide polyethylene sheet having a heat shrinkability (thickness=800 μm, width=45 cm, thermal shrinkage factor at 150°C=18%, heat-shrinking direction=longitudinal direction). The laminate was irradiated with electron beams from the side of the adhesive layer to form a continuous wide web comprising the crosslinked heat-shrinkable polyethylene layer and the crosslinked polymer adhesive layer. The web was cut at intervals of 20 cm in the direction rectangular to the longitudinal direction to form a heat-sealing tape having a width of 20 cm and a length of 45 cm.

In this heat-sealing tape, the polyethylene layer had the above-mentioned heat shrinkability in the width direction of the tape, and the crosslinking degree of the polyethylene layer corresponded to a gel fraction of 50%. The crosslinking degree of the crosslinked polymer adhesive layer corresponded to a gel fraction of 20%.

The heat-shrinkable covering sheet was wound around a steel pipe having a nominal diameter of 16 inches as shown in Figure 1, both ends of the covering sheet were lapped together, and the above-mentioned heat-sealing tape having a length of 450 mm and a width of 200 mm was further lapped on the lapping portion. The heat-sealing tape was bonded integrally to the lapping portion by heating to form a tubular member of the heat-shrinkable covering sheet.

The tubular member was heated at about 105° to about 110°C by a flame of a gas burner to effect thermal shrinkage and bring the tubular member into close contact with the periphery of the steel pipe. Heating was further conducted to bond the adhesive layer of the heat-shrinkable covering sheet to the periphery of the steel pipe and complete covering of the steel pipe.

When the covering state of the thus-covered steel pipe was examined, it was found that as shown in Figure 3, no void was present in the lapping portion of the covering layer formed of the heat-shrinkable covering sheet, namely, a covering layer having a good anti-corrosive property was formed. Furthermore, the length (in the peripheral direction) of the lapping portion of the covering layer was shorter by only about 8% than the length (in the peripheral direction) of the lapping portion of the tubular member before the heat-shrinking step, and the heat-sealing tape was shrunk by about 5% in the width direction; namely, no elongation of the tape by heat was caused.

Comparative Example 1

A steel pipe was covered in the same manner as in Example 1 except that a heat-sealing tape which was similar to the heat-sealing tape used in Example 1 but had no heat shrinkability was used instead of the heat-sealing tape used in Example 1.

The covering state of the thus-covered steel pipe was examined, and it was found that in the lapping portion of the covering layer formed of the heat-shrinkable covering heat, a large void (waterway) was formed between the covering layer and the periphery of the steel pipe.

The length (in the peripheral direction) of the lapping portion of the covering layer was shorter by about 35% than the length (in the peripheral direction) of the lapping portion of the tubular member before the heat-shrinking operation. The heat-sealing tape was elongated by about 10% in the width direction, namely, it was confirmed that considerable elongation of the tape was caused by heat.

Example 2

The procedure mentioned in Example 1 was repeated to prepare a heat-sealing tape. In this example, an alicyclic hydrocarbon resin was used instead of the cumarone-indene resin for the preparation of an adhesive sheet, and the irradiation with electron beams was made twice, namely, first on the wide polyethylene sheet before it was laminated with the adhesive sheet and second on the laminate having the crosslinked polyethylene layer and the adhesive layer. All other conditions remained substantially the same. The cross-linked polyethylene sheet exhibited a gel fraction of 45% before it was laminated with the adhesive sheet.

In this heat-sealing tape, the thermal shrinkage factor of the polyethylene layer was 20% at 150°C and the crosslinking degree of the polyethylene layer corresponded to a gel fraction of 60%. The crosslinking degree of the crosslinked polymer adhesive layer corresponded to a gel fraction of 18%.

The heat-shrinkable covering sheet was wound around a steel pipe having a nominal diameter of 16 inches as shown in Figure 1, both ends of the covering sheet were lapped together, and the above-mentioned heat-sealing tape having a length of 450 mm and a width of 200 mm was further lapped on the lapping portion. The heat-sealing tape was bonded integrally to the lapping portion by heating to form a tubular member of the heat-shrinkable covering sheet.

The tubular member was heated at about 105° to about 110°C by a flame of a gas burner to effect thermal shrinkage and bring the tubular member into close contact with the periphery of the steel pipe. Heating was further conducted to bond the adhesive layer of the heat-shrinkable covering sheet to the periphery of the steel pipe and complete covering of the steel pipe.

When the covering state of the thus-covered steel pipe was examined, it was found that as shown in Figure 3, no void was present in the lapping portion of the covering layer formed of the heat-shrinkable covering sheet, namely, a covering layer having a good anti-corrosive property was formed. Furthermore, the length (in the peripheral direction) of the lapping portion of the covering layer was shorter by only about 6% than the length (in the peripheral direction) of the lapping portion of the tubular member before the heat-shrinking step, and the heat-sealing tape was shrunk by about 6% in the width direction, namely no elongation of the tape by heat was caused.

## Claims

1. A method for covering the periphery of a continuous article with a heat-shrinkable covering sheet comprising a plastic layer having a heat shrinkability and a heat-bonding adhesive layer wherein the heat-shrinklable covering sheet is wound around the periphery of the continuous article, both ends of the covering sheet are lapped together, a heat-sealing tape having a heat-bonding adjacent layer formed on one surface is further lapped on the lapping portion of the covering sheet to form a tubular member of the covering sheet, and then the tubular member is heated to thereby shrink toward the periphery of the continuous article, characterized in that a heat-sealing tape comprising a plastic layer exhibiting a thermal shrinkage factor of 5 to 25% in the width direction of the tape and a heat-bonding adhesive layer is lapped on the covering sheet, the heat-bonding adhesive layer of heat covering sheet is formed on a single one centre surface of the plastic layer so that the heat-shrinking direction of the heat-sealing tape is the same as the heat-shrinking direction of the heat-shrinkable covering sheet and the adhesive layer of the heat-sealing tape is brought in close contact with the surface of said lapping portion of the heat-shrinkable covering sheet, said adhesive layer of the heat-sealing tape being comprised of a heat-bonding crosslinked polymer exhibiting a shear strength of 0.1 to 5 kg/cm$^2$ as determined at 100°C and 0.01 to 0.8 kg/cm$^2$ as determined at 150°C, to the surfaces of both ends of the heat-shrinklable covering sheet; heating is then effected under conditions such that at least about 1/2 of the heat-shrinkability of the heat-sealing tape remains.

2. A method according to claim 1, wherein the adhesive layer of the heat-sealing tape is an adhesive layer of a heat-bonding crosslinked polymer obtained by partially crosslinking an adhesive composition comprising as main components a polyolefin and a tackifier, and the plastic layer of the heat-sealing tape is a cross-linked polyolefin layer.

3. A method according to claims 1 and 2, wherein the plastic layer of the heat-sealing tape is prepared by forming a polyolefin film or sheet having a thickness of about 50 to 2000 μm, drawing the polyolefin film or sheet at a temperature of about 80 to 200°C, and then crosslinking the polyolefin film or sheet to an extent such that the gel fraction of the polyolefin is about 20 to 90%.

4. A method according to claim 1, wherein the adhesive layer of a heat-bonding crosslinked polymer is prepared by a process wherein an adhesive composition comprising, based on the total weight of the adhesive composition, about 50 to 95% by weight of a polyolefin and about 5 to 50% by weight of a tackifier is partially crosslinked to an extent such that the gel fraction of the polyolefin is about 5 to 50%.

5. A method according to any of claims 1 to 5, wherein the heat-sealing tape has a thickness of about 0.2 to 4 mm, the adhesive layer has a thickness of about 0.1 to 3.0 mm, the plastic layer has a thickness of about 0.05 to 2.5 mm, and the ratio in thickness of the adhesive layer to the plastic layer is about 1/10 to about 3/1.

6. A method according to any of claims 1 to 6, wherein the heat-shrinkable covering sheet is composed of the crosslinked plastic layer having a heat shrinkability and the heat-bondable adhesive layer formed on one surface of the crosslinked plastic layer, said crosslinked plastic layer having a heat-shrinking temperature of about 80 to about 200°C, a thermal shrinkage factor of about 15 to about 80% and a gel fraction of about 20 to about 90%, and said heat-bondable adhesive layer exhibiting a peeling strength of 1 to 25 kg/cm at normal temperature.

## Patentansprüche

1. Verfahren zum Umhüllen der Außenfläche eines kontinuierlichen Gegenstandes mit einem in der Hitze schrumpfbaren Abdeckblatt aus einer plastischen Schicht mit Hitze-Schrumpffähigkeit und einer in der Hitze abbindenden Klebstoffschicht, bei dem das in der Hitze schrumpfbare Abdeckblatt um die Außenfläche des kontinuierlichen Gegenstandes gewickelt wird, wobei beide Enden des Abdeckblattes zur Überlappung gebracht werden, bei dem ferner ein Hitze-Versiegelungsbandmit einer in der Hitze abbindenden Klebstoffschicht auf einer Seite auf den Überlappungsteil des Abdeckblattes gebracht wird, unter Ausbildung eines rohrförmigen Körpers aus dem Abdeckblatt, und bei dem der rohrförmige Körper daraufhin erhitzt wird, wobei er auf die Außenfläche des kontinuierlichen Gegenstandes aufschrumpft, dadurch gekennzeichnet, daß ein Hitze-Versiegelungsband mit einer plastischen Schicht mit einem Wärmeschrumpffaktor von 5 bis 25% bezüglich der Breite des Bandes und einer in der Hitze abbindenden Schicht auf das Abdeckblatt aufgebracht wird, wobei die in der Hitze abbindende Klebstoffschicht des Abdeckblattes auf einer vollen Oberfläche der plastischen Schicht ausgebildet ist, so daß die Richtung des Hitzeschrumpfes des Hitze-Versiegelungsbandes gleich ist der Richtung des Schrumpfes des in der Hitze schrumpfbaren Abdeckblattes und daß die Klebstoffschicht des Hitze-Versiegelungsbandes in engen Kontakt mit der Oberfläche des Oberlappungsteiles des in ker Hitze schrumpfbaren Abdeckblattes gebracht wird, wobei die Klebstoffschicht des Hitze-Versiegelungsbandes ein in der Hitze abbindendes quervernetztes Polymer enthält, mit einer Scherkraft von 0,1 bis 5 kg/cm$^2$, bestimmt bei 100°C und 0,01 bis 0,8 kg/cm$^2$, bestimmt bei 150°C auf die Oberfläche der beiden Enden des in der Hitze schrumpfbaren Abdeckblattes und daß das Erhitzen unter Bedingungen erfolgt, bei denen mindestens etwa 1/2 der Hitze-Schrumpffähigkeit des Hitze-Versiegelungsbandes erhalten bleibt.

2. Verfahren nach Anspruch 1, bei dem die Klebstoffschicht des Hitze-Versiegelungsbandes eine Klebstoffschicht aus einem in der Hitze abbindenden quervernetzten Polymer ist, das erhalten wurde durch teilweise Quervernetzung einer Klebstoff-Zusammensetzung, die als Hauptbestandteil ein Polyolefin und eine klebrigmachende Komponente enthält, und daß die plastische Schicht des Hitze-Versiegelungsbandes eine quervernetzte Polyolefinischicht ist.

3. Verfahren nach Ansprüchen 1 und 2, bei dem die plastische Schicht des Hitze-Versiegelungsbandes hergestellt wird durch Formen einer Polyolefinfolie oder eines Polyolefinblattes mit einer Stärke von etwa 50 bis 2000 µm, Verstrecken der Polyolefinfolie oder des Polyolefinblattes bei einer Temperatur von etwa 80 bis 200°C und Quervernetzung der Polyolefinfolie oder des Polyolefinblattes in einem Umfang, daß die Gel-Fraktion des Polyolefins etwa 20 bis 90% beträgt.

4. Verfahren nach Anspruch 1, bei dem die Klebstoffschicht aus einem in der Hitze abbindenden quervernetzten Polymer nach einem Verfahren hergestellt wird, bei dem eine Klebstoffzusammensetzung mit, bezogen auf das Gesamtgewicht der Klebstoffzusammensetzung, etwa 50 bis 95 Gew.-% eines Polyolefins und etwa 5 bis 50 Gew.-% einer klebrigmachenden Komponente, in einem Ausmaß teilweise quervernetzt wird, daß die Gel-Fraktion des Polyolefins etwa 5 bis 50% beträgt.

5. Verfahren nach einem der Ansprüche 1 bis 4, bei dem das Hitze-Versiegelungsband eine Stärke von etwa 0,2 bis 4 mm, die Klebstoffschicht eine Stärke von etwa 0,1 bis 3,0 mm und die plastische Schicht eine Stärke von etwa 0,05 bis 2,5 mm hat und bei dem das Verhältnis der Stärken von Klebstoffschicht zu plastischer Schicht bei etwa 1/10 bis etwa 3/1 liegt.

6. Verfahren nach einem der Ansprüche 1 bis 5, bei dem das in der Hitze schrumpfbare Abdeckblatt zusammengesetzt ist aus der quervernetzten plastischen Schicht mit Hitze-Schrumpffähigkeit und der in der Hitze abbindenden Klebstoffschicht auf einer Oberfläche der quervernetzten plastischen Schicht, wobei die quervernetzte plastische Schicht eine Hitzeschrumpftemperatur von etwa 80 bis etwa 200°C, einen Wärmeschrumpffaktor von etwa 15 bis etwa 80% und eine Gelfraktion von etwa 20 bis etwa 90% aufweist und wobei die in der Hitze abbindende Klebstoffschicht eine Abziehfestigkeit von 1 bis 25 kg/cm bei Normaltemperatur aufweist.

## Revendications

1. Procédé pour recouvrir la périphérie d'un objet continu d'une feuille de couverture thermorétrécissable comportant une couche de matière plastique présentant une aptitude au thermorétrécissement et une couche adhésive collant à chaud, dans lequel on enroule la feuille de couverture thermorétrécissable autour de la périphérie de l'objet continu, on recouvre l'une par l'autre les deux extrémités de la feuille de couverture, on recouvre en outre la partie en recouvrement de la feuille de couverture d'un ruban thermoadhésif présentant sur une de ses faces une couche adhésive collant à chaud de façon à former avec la feuille de couverture un élément tubulaire, et un chauffe ensuite l'élément tubulaire pour le faire ainsi rétrécir vers la périphérie de l'objet continu, caractérisé en ce qu'on recouvre la feuille de couverture d'un ruban thermoadhésif comportant une couche de matière plastique présentant dans la direction de la largeur du ruban un coefficient de rétrécissement à chaud de 5 à 25%, et une couche adhésive collant à chaud, en ce qu'on forme la couche adhésive collant à chaud de cette feuille de couverture sur une face unique entière de la feuille de matière plastique de façon que la direction de rétrécissement à chaud du ruban thermoadhésif soit identique à la direction de rétrécissement à chaud de la feuille de couverture thermorétrécissable et que la couche adhésive du ruban thermoadhésif soit amenée en contact étroit avec la surface de ladite partie en recouvrement de la feuille de couverture thermorétrécissable, la couche adhésive du ruban collant à chaud étant composée d'un polymère réticulé collant à chaud présentant une résistance au cisaillement de 0,1 à 5 kg/cm$^2$ si on la détermine à 100°C, et de 0,01 à 0,8 kg/cm$^2$ si on la détermine à 150°C, puis en ce qu'on procède au chauffage dans des conditions telles qu'il subsiste au moins environ 1/2 de l'aptitude au rétrécissement à chaud du ruban thermoadhésif.

2. Procédé conforme à la revendication 1, dans lequel la couche adhésive du ruban thermoadhésif est une couche d'un polymère réticulé collant à chaud obtenu en faisant réticuler partiellement une composition adhésive contenant comme constituants principaux une polyoléfine et un élément rendant adhésif, et la couche de matière plastique du ruban thermoadhésif est une couche de polyoléfine réticulée.

3. Procédé conforme à l'une des revendications 1 ou 2, dans lequel on prépare la couche de matière plastique du ruban thermoadhésif en formant une pellicule ou une feuille de polyoléfine ayant une épaisseur d'environ 50 à 2000 µm, en étirant la pellicule ou la feuille de polyoléfine à une température d'environ 80 à 200°C, et en faisant ensuite réticuler la pellicule ou la feuille de polyoléfine jusqu'à un degré tel que la fraction de la polyoléfine sous forme de gel représente environ 20 à 90% de celle-ci.

4. Procédé conforme à la revendication 1, dans lequel on prépare la couche adhésive en un polymère réticulé collant à chaud au moyen d'un processus dans lequel on fait réticuler partiellement une composition adhésive comprenant, sur la base du poids total de la composition adhésive, environ 50 à 95% en poids d'une oléfine et environ 5 à 50% en poids d'un élément rendant adhésif jusqu'à un degré tel que la fraction de la polyoléfine sous forme de gel représente environ 5 à 50% de celle-ci.

5. Procédé conforme à l'une des revendications 1 à 4, dans lequel le ruban thermoadhésif a une épaisseur d'environ 0,2 à 4 mm, la couche adhésive a une épaisseur d'environ 0,1 à 3,0 mm, la couche de matière plastique a une épaisseur d'environ 0,05 à 2,5 mm, et le rapport entre les épaisseurs respectives de la couche adhésive et de la couche de matière plastique est compris entre 1/10 environ et 3/1 environ.

6. Procédé conforme à l'une des revendications 1 à 5, dans lequel la feuille de couverture thermorétrécissable est constituée par la couche de matière plastique réticulée présentant une aptitude au rétrécissement à chaud, et par la couche adhésive susceptible de coller à chaud ménagée sur une face de la couche de matière plastique réticulée, cette couche de matière plastique réticulée présentant une température de rétrécissement à chaud comprise entre 80°C environ et 200°C environ, un facteur de rétrécissement à chaud compris entre 15% environ et 80% environ, et une fraction sous forme de gel comprise entre 20% environ et 90% environ, et la couche adhésive susceptible de coller à chaud présentant une résistance au décollement comprise entre 1 et 25 kg/cm à la température ordinaire.

## Fig. 1

## Fig. 2

## Fig. 3

## Fig. 4